# EUROPÄISCHE PATENTSCHRIFT

(11) **EP 3 990 215 B1**
(45) Veröffentlichungstag und Bekanntmachung des Hinweises auf die Patenterteilung: **31.12.2025**
(21) Anmeldenummer: 20743958.9
(22) Anmeldetag: 19.06.2020
(51) Int. Cl.: B23Q 1/00, B23B 31/107

(54) **SCHNELLWECHSELSYSTEM, RUNDSCHALTTISCH MIT EINEM SOLCHEN SCHNELLWECHSELSYSTEM, SOWIE VERWENDUNG**
QUICK-CHANGE SYSTEM, ROTARY INDEXING TABLE HAVING A QUICK-CHANGE SYSTEM OF THIS TYPE, AND USE
SYSTÈME À CHANGEMENT RAPIDE, TABLE À TRANSFERT CIRCULAIRE ÉQUIPÉE D'UN TEL SYSTÈME À CHANGEMENT RAPIDE, ET UTILISATION

(30) Priorität: 28.06.2019 DE 102019117457
(43) Veröffentlichungstag der Anmeldung: 04.05.2022
(73) Patentinhaber: Schaeffler Technologies AG & Co. KG, 91074 Herzogenaurach (DE)
(72) Erfinder: VOLK, Wolfgang, 96158 Frensdorf (DE); MÜLLER, Lutz, 91462 Dachsbach (DE)
(74) Vertreter: Schaeffler Technologies
(86) Internationale Anmeldenummer: PCT/DE2020/100522
(87) Internationale Veröffentlichungsnummer: WO 2020/259754

(56) Entgegenhaltungen:
- EP-B1- 3 990 236
- CN-U- 208 976 912
- DE-A1- 3 512 929
- DE-A1- 3 841 734
- DE-C1- 10 154 876
- JP-U- 3 217 883

## Beschreibung

Die Erfindung betrifft ein Schnellwechselsystem umfassend mindestens ein Aufnahmeteil und mindestens ein Wechselwerkzeug, wobei das Aufnahmeteil mindestens eine Aufnahmeöffnung zur Aufnahme je eines Wechselwerkzeugs aufweist. Die Erfindung betrifft weiterhin einen Rundschalttisch mit einem Schnellwechselsystem und dessen Verwendung.

Schnellwechselsysteme der eingangs genannten Art sind beispielsweise aus der DE 103 04 507 D1 bekannt. Das dort beschriebene Werkzeugwechselsystem ist zur lösbaren Kopplung von Werkzeugen an Handhabungsgeräten vorgesehen. Dabei sind ein Wechselkopf, ein Wechseladapter und Verriegelungsmittel zur Verriegelung des Wechselkopfs mit dem Wechseladapter vorhanden. Die Verriegelungsmittel umfassen ein elastisch verformbares Betätigungsorgan, das in verriegeltem Zustand Verriegelungsglieder derart federnd vorgespannt beaufschlagt, dass die Verriegelungsglieder in ihrer jeweiligen Verriegelungslage gehalten werden.

Die CN 208 976 912 U beschreibt ein Schnellwechselsystem nach dem Oberbegriff von Anspruch 1 für eine Tiefbohrmaschine umfassend mindestens ein Aufnahmeteil und mindestens ein Wechselwerkzeug. Die DE 101 54 876 C1 offenbart ein Werkzeugwechselsystem zur lösbaren Kopplung von Werkzeugen an Handhabungsgeräten.

Aufgabe der vorliegenden Erfindung ist es, ein alternatives Schnellwechselsystem bereitzustellen, das wenig Bauraum benötigt. Weiterhin ist es Aufgabe der Erfindung, einen Einsatzort und eine Verwendung für ein solches Schnellwechselsystem anzugeben.

Die Aufgabe wird für das Schnellwechselsystem umfassend mindestens ein Aufnahmeteil und mindestens ein Wechselwerkzeug gelöst, indem
- das Aufnahmeteil mindestens eine Aufnahmeöffnung zur Aufnahme je eines Wechselwerkzeugs aufweist, wobei
mindestens ein Kugeldruckstück zur temporären Fixierung des Wechselwerkzeugs am Aufnahmeteil vorgesehen ist, wobei das Kugeldruckstück eine einseitig geschlossene Hülse umfasst, in welcher eine gefedert gelagerte Druckkugel angeordnet ist, wobei die Druckkugel in eine Kugelaufnahmeöffnung am Wechselwerkzeug manuell einrastbar und wieder ausrastbar ist, wobei die einseitig geschlossene Hülse des Kugeldruckstücks eine Symmetrieachse S aufweist, wobei die Druckkugel entlang der Symmetrieachse S verschieblich ist, und wobei die Kugelaufnahmeöffnung eine Mittelachse M aufweist, die in einem eingerasteten Zustand von Aufnahmeteil und Wechselwerkzeug parallel zur Symmetrieachse S verläuft, und wobei die Symmetrieachse S und die Mittelachse M im eingerasteten Zustand in einem Abstand A von 1 bis 3,5 mm parallel verlaufen.

Das Schnellwechselsystem ist besonders platzsparend einsetzbar und es kann ohne Einsatz eines weiteren Werkzeuges eingesetzt werden. Das manuelle Einrasten und Ausrasten des Wechselwerkzeuges ist möglich, da die Haltekräfte zwischen Wechselwerkzug und Aufnahmeteil in einem manuell handhabbaren Rahmen gehalten werden können. So sind Maschinen mit derartigen Schnellwechselsystemen schnell umrüstbar und benötigen einen geringen Personalaufwand.

Unter einer Kugelaufnahmeöffnung wird dabei beispielsweise eine Aussparung, ein Sackloch, ein Ausschnitt, eine durchgehende Bohrung, ein Einschnitt, eine Nut und dergleichen verstanden, die so dimensioniert ist, dass ein Einrasten einer korrespondierend dazu angeordneten Druckkugel möglich ist.

Über eine Einstellung des Abstandes A der Symmetrieachse S und der Mittelachse M im eingerasteten Zustand lassen sich die Haltekräfte senkrecht zur Federwirkung zwischen Wechselwerkzeug und dem Aufnahmeteil auf ein optimal handhabbares Maß einstellen. Je kleiner der Abstand A, desto geringer ist die Haltekraft. Dabei können Haltekräfte im Bereich von 5 bis 50 N eingestellt werden.

Die einseitig geschlossene Hülse des Kugeldruckstücks ist dabei im Bereich ihrer offenen Seite so dimensioniert, dass die Druckkugel sicher in der Hülse gehalten wird.

Das Aufnahmeteil und das Wechselwerkzeug sind bevorzugt derart verrastbar, dass das Wechselwerkzeug in einer Einrastrichtung, welche senkrecht zu der Symmetrieachse S verläuft, in die Aufnahmeöffnung einschiebbar ist.

Dabei hat es sich bewährt, wenn am Wechselwerkzeug mindestens ein Wechselwerkzeug-Anschlag ausgebildet sind, der eine Festlegung der vertikalen Position des Wechselwerkzeugs in der Aufnahmeöffnung ermöglicht. Bevorzugt sind zwei Wechselwerkzeug-Anschläge vorgesehen, die ein Wandern des Wechselwerkzeugs in der Aufnahmeöffnung zuverlässig verhindern.

Die Kugelaufnahmeöffnung weist bevorzugt einen Kontaktbereich auf, welcher im eingerasteten Zustand die Druckkugel berührt, wobei der Kontaktbereich mit einem Kantenbruch, auch Fase genannt, versehen ist. Dabei hat sich ein Kantenbruch im Bereich von 0,2 bis 0,4 mm bewährt. Der Kantenbruch gibt dabei die Länge der Strecke zwischen jeder der beiden gebildeten Fasenkanten und der ursprünglich vorhandenen (und beim Einbringen der Fase entfernten) Kante der Kugelaufnahmeöffnung an.

Vorzugsweise ist weiterhin mindestens ein Zentrierstift am Aufnahmeteil vorhanden, welcher in eine Zentrieröffnung am Wechselwerkzeug einbringbar ist. Alternativ ist mindestens ein Zentrierstift am Wechselwerkzeug vorhanden, welcher in eine Zentrieröffnung am Aufnahmeteil einbringbar ist. Dies verhindert ein Verdrehen des Aufnahmeteils relativ zum Wechselwerkzeug und fixiert das Wechselwerkzeug zuverlässig in der gewünschten Einbaulage.

Die Aufgabe wird weiterhin gelöst, indem ein Rundschalttisch umfassend mindestens ein erfindungsgemäßes Schnellwechselsystem, insbesondere mindestens zwei erfindungsgemäße Schnellwechselsysteme, bereitgestellt wird.

Insbesondere hat sich eine Verwendung des erfindungsgemäßen Rundschalttisches zur Montage von Wälzlagern oder Gleitlagern oder zur Bearbeitung von Wälzlager- oder Gleitlagerbauteilen bewährt. Weiterhin hat sich eine Verwendung eines derartigen Rundschalttischs zur Montage oder zur Bearbeitung von Motorkomponenten als vorteilhaft erwiesen.

Die Figuren 1a bis 6 sollen erfindungsgemäße Schnellwechselsysteme sowie einen damit ausstattbaren Rundschalttisch beispielhaft erläutern. So zeigt
- Figur 1a: ein erstes Schnellwechselsystem in dreidimensionaler Ansicht,
- Figur 1b: das erste Schnellwechselsystem gemäß Figur 1a im Längsschnitt,
- Figur 1c: das erste Schnellwechselsystem gemäß Figur 1a im Querschnitt durch die Kugeldruckstücke,
- Figur 2: ein zweites Schnellwechselsystem in dreidimensionaler Ansicht,
- Figur 3: das zweite Schnellwechselsystem gemäß Figur 2 in dreidimensionaler Ansicht von unten in teilweiser Darstellung,
- Figur 4: einen Schnitt durch eines der Kugeldruckstücke des zweiten Schnellwechselsystems gemäß den Figuren 2 und 3,
- Figur 5: ein Beispiel für ein Kugeldruckstück mit eingerasteter Druckkugel in vergrößerter Ansicht im Schnittbild, und
- Figur 6: einen Rundschalttisch.

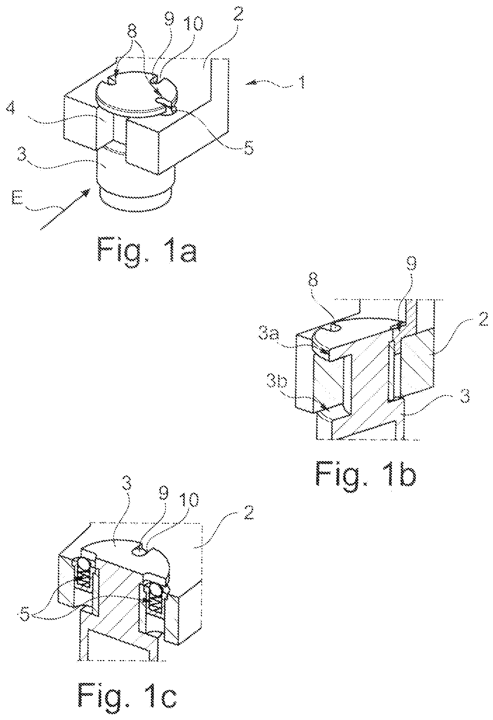

Die Figuren 1a bis 1c zeigen ein erstes Schnellwechselsystem 1 in dreidimensionaler Ansicht, wobei die Figur 1b das erste Schnellwechselsystem 1 gemäß Figur 1a im Längsschnitt und Figur 1c das erste Schnellwechselsystem 1 gemäß Figur 1a im Querschnitt durch die Kugeldruckstücke 5 zeigt. Gleiche Bezugszeichen in den Figuren 1a bis 1c kennzeichnen gleiche Elemente.

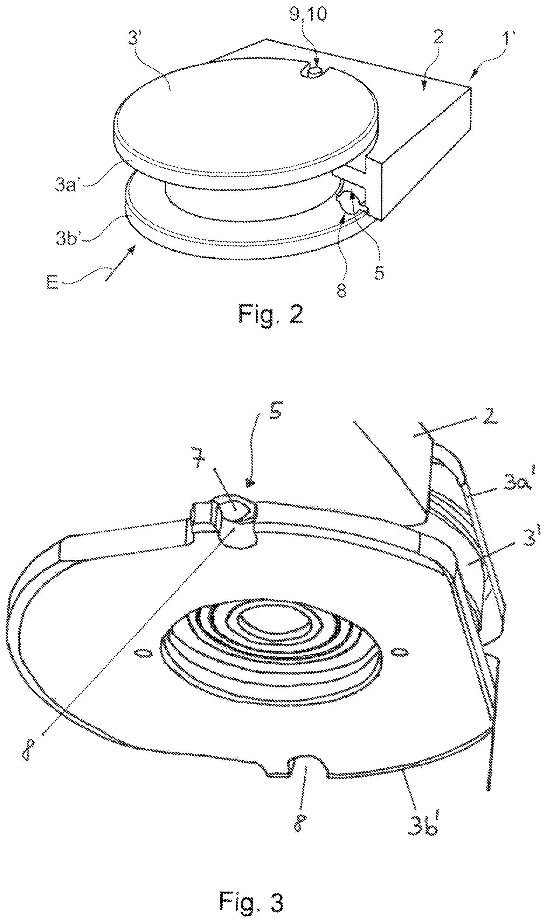

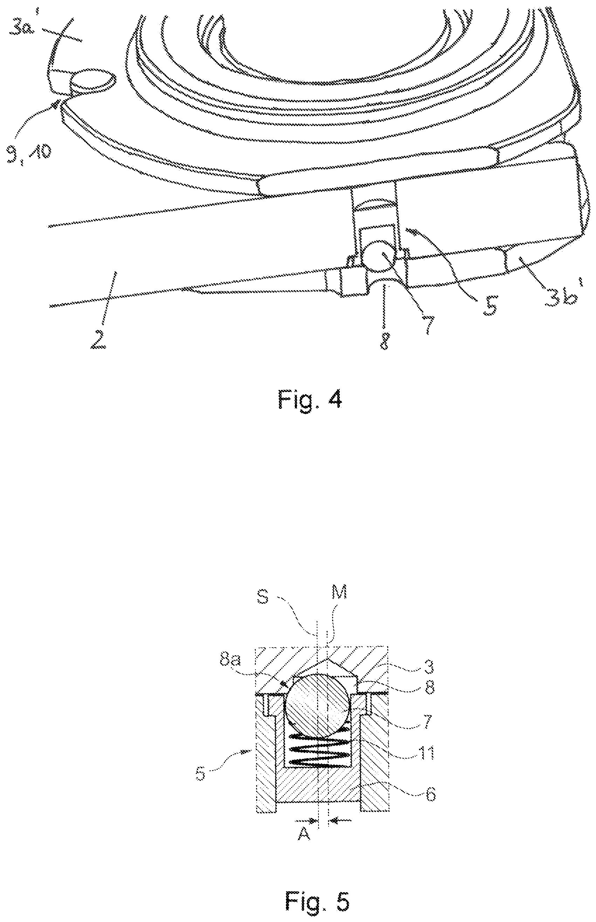

Das erste Schnellwechselsystem 1 umfasst ein Aufnahmeteil 2 und ein Wechselwerkzeug 3, wobei das Aufnahmeteil 2 eine Aufnahmeöffnung 4 zur Aufnahme des Wechselwerkzeugs 3 aufweist. Es sind weiterhin am Aufnahmeteil 2 zwei Kugeldruckstücke 5 (vergleiche Figur 1c) zur temporären Fixierung des Wechselwerkzeugs 3 am Aufnahmeteil 2 vorhanden. Jedes Kugeldruckstück 5 umfasst eine einseitig geschlossene Hülse 6 (siehe Figur 5), in welcher eine gefedert gelagerte Druckkugel 7 angeordnet ist. Die Druckkugeln 7 sind in je eine Kugelaufnahmeöffnung 8 am Wechselwerkzeug 3 manuell einrastbar und aus diesen auch wieder ausrastbar, um beispielsweise schnell einen Wechsel auf ein andersartig dimensioniertes Wechselwerkzeug 3' (vergleiche Figuren 2 bis 4) oder ein, für einen anderen Bearbeitungsvorgang ausgelegtes Wechselwerkzeug durchführen zu können. Um das Wechselwerkzeug 3 verdrehsicher zu befestigen, ist hier ein Zentrierstift 9 am Aufnahmeteil 2 vorhanden, auf welchen eine Zentrieröffnung 10 am Wechselwerkzeug 3 aufschiebbar ist. Das Wechselwerkzeug 3 wird zum Verrasten mit dem Aufnahmeteil 2 in Einrastrichtung E manuell auf das Aufnahmeteil 2 zubewegt. Die am Wechselwerkzeug 3 hier vorgesehenen Wechselwerkzeug-Anschläge 3a, 3b (vergleiche Figur 1b) werden oberhalb und unterhalb des Aufnahmeteils 2 zur Anlage gebracht und das Wechselwerkzeug 3 in die Aufnahmeöffnung 4 geschoben, bis die beiden Druckkugeln 7 in die Kugelaufnahmeöffnungen 8 einrasten und der Zentrierstift 9 in der Zentrieröffnung 10 zu liegen kommt.

Die Figur 2 zeigt ein zweites Schnellwechselsystem 1' in dreidimensionaler Ansicht. Das zweite Schnellwechselsystem 1 umfasst ein Aufnahmeteil 2 und ein Wechselwerkzeug 3', wobei das Aufnahmeteil 2 eine Aufnahmeöffnung zur Aufnahme des Wechselwerkzeugs 3' aufweist. Es sind weiterhin am Aufnahmeteil 2 zwei Kugeldruckstücke 5 zur temporären Fixierung des Wechselwerkzeugs 3' am Aufnahmeteil 2 vorhanden, wobei nur eines der Kugeldruckstücke 5 im Teilschnitt dargestellt und sichtbar ist. Die Druckkugeln 7 (vergleiche Figur 3) sind in je eine Kugelaufnahmeöffnung 8 (vergleiche Figur 3) am Wechselwerkzeug 3' manuell einrastbar und aus diesen auch wieder ausrastbar, um beispielsweise schnell einen Wechsel auf ein andersartig dimensioniertes Wechselwerkzeug 3 (vergleiche Figur 1a) oder ein, für einen anderen Bearbeitungsvorgang ausgelegtes Wechselwerkzeug durchführen zu können. Um das Wechselwerkzeug 3' verdrehsicher zu befestigen, ist ein Zentrierstift 9 am Aufnahmeteil 2 vorhanden, auf welchen eine Zentrieröffnung 10 am Wechselwerkzeug 3' aufschiebbar ist. Das Wechselwerkzeug 3' wird zum Verrasten mit dem Aufnahmeteil 2 in Einrastrichtung E manuell auf das Aufnahmeteil 2 zubewegt. Die am Wechselwerkzeug 3' hier vorgesehenen Wechselwerkzeug-Anschläge 3a', 3b' werden oberhalb und unterhalb des Aufnahmeteils 2 zur Anlage gebracht und das Wechselwerkzeug 3' in die Aufnahmeöffnung geschoben, bis die beiden Druckkugeln 7 (vergleiche Figur 3) in die Kugelaufnahmeöffnungen 8 einrasten und der Zentrierstift 9 in der Zentrieröffnung 10 zu liegen kommt.

Figur 3 zeigt das zweite Schnellwechselsystem 1' gemäß Figur 2 in dreidimensionaler Ansicht von unten in teilweiser Darstellung. Gleiche Bezugszeichen wie oben zu in Figur 2 beschrieben kennzeichnen gleiche Elemente.

Figur 4 zeigt einen Schnitt durch eines der Kugeldruckstücke 5 des zweiten Schnellwechselsystems 1' gemäß den Figuren 2 und 3. Gleiche Bezugszeichen wie oben zu Figur 2 oder 3 beschrieben kennzeichnen gleiche Elemente.

Die Figur 5 zeigt ein Beispiel für ein mögliches Kugeldruckstück 5 in vergrößerter Ansicht im Schnittbild. Es ist die einseitig geschlossene Hülse 6 erkennbar, in welcher eine mittels eines Federelements 11 gefedert gelagerte Druckkugel 7 angeordnet ist. Die Hülse 6 weist eine Symmetrieachse S auf, wobei die Druckkugel 7 entlang der Symmetrieachse S verschieblich ist. Als Federelement 11 ist hier eine Schraubendruckfeder vorgesehen, es können aber auch andersartig gestaltete Federelement, wie Kegelfedern, Tellerfedern, aus einem Elastomer gebildete Elemente und dergleichen, zum Einsatz kommen.

Oberhalb des Kugeldruckstücks 5 ist ein Abschnitt eines Wechselwerkzeugs 3, hier im Bereich einer Kugelaufnahmeöffnung 8 in Form eines Sacklochs, erkennbar. Die Kugelaufnahmeöffnung 8 weist eine Mittelachse M auf, die in einem eingerasteten Zustand von Aufnahmeteil 2 und Wechselwerkzeug 3, wie hier dargestellt, parallel zur Symmetrieachse S verläuft.

Die Symmetrieachse S und die Mittelachse M verlaufen hier im eingerasteten Zustand in einem Abstand A im Bereich von 1 bis 3,5 mm parallel zueinander. Die Auswahl des Abstands A hat dabei direkten Einfluss auf die Haltekraft zwischen Wechselwerkzeug 3 und Aufnahmeteil 2 im eingerasteten Zustand. Zumindest im Kontaktbereich 8a, in welchem eine Kante der Kugelaufnahmeöffnung 8 in Kontakt zur Oberfläche der Druckkugel 7 gelangen würde, weist die Kugelaufnahmeöffnung 8 einen Kantenbruch auf. Auch die Wahl der Größe des Kantenbruchs hat dabei einen Einfluss auf die Haltekraft zwischen Wechselwerkzeug 3 und Aufnahmeteil 2 im eingerasteten Zustand.

Die konkrete konstruktive Auslegung zu der im jeweiligen Anwendungsfall benötigten Haltekraft kann anhand weniger Versuche aufgefunden werden.

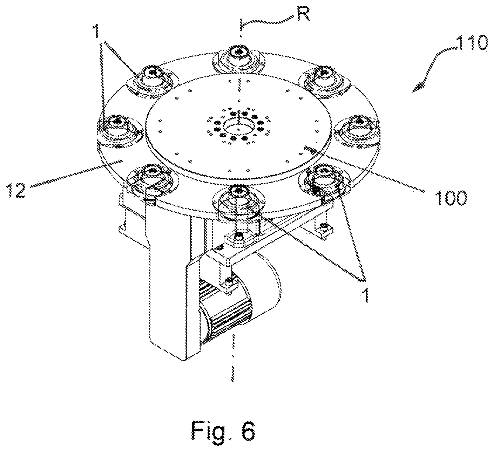

Die Figur 6 zeigt eine Rundschalttischeinheit 110 mit einem Rundschalttisch 100. Der Rundschalttisch 100 umfassend eine Halterung 12 ist um eine Rotationsachse R rotierbar angeordnet. Am Rundschalttisch 100 befinden sich eine Mehrzahl an ersten Schnellwechselsystemen 1 (beispielsweise gemäß Figur 1a), deren Aufnahmteile 2 an der Halterung 12 befestigt sind. Dabei können die Aufnahmeteile 2 gegebenenfalls auch einstückig mit der Halterung 12 ausgeführt sein. Eine Umrüstung des Rundschalttisches 100 auf ein anderes Wechselwerkzeug 3 bei gleichbleibendem Aufnahmeteil 2 ist effizient und rein manuell, das heißt ohne Einsatz von zusätzlichem Montagewerkzeug, mit minimaler Rüstzeit durchführbar.

### Bezugszeichenliste

- 1, 1': Schnellwechselsystem
- 2: Aufnahmeteil
- 3, 3': Wechselwerkzeug
- 3a, 3b, 3a', 3b': Wechselwerkzeug-Anschlag
- 4: Aufnahmeöffnung
- 5: Kugeldruckstück
- 6: Hülse
- 7: Druckkugel
- 8: Kugelaufnahmeöffnung
- 8a: Kontaktbereich
- 9: Zentrierstift
- 10: Zentrieröffnung
- 11: Federelement
- 12: Halterung
- 100: Rundschalttisch
- 110: Rundschalttischeinheit
- A: Abstand
- S: Symmetrieachse
- M: Mittelachse
- E: Einrastrichtung
- R: Rotationsachse

## Patentansprüche

1. Schnellwechselsystem (1, 1') umfassend mindestens ein Aufnahmeteil (2) und mindestens ein Wechselwerkzeug (3, 3'), wobei
- das Aufnahmeteil (2) mindestens eine Aufnahmeöffnung (4) zur Aufnahme je eines Wechselwerkzeugs (3, 3') aufweist, wobei
mindestens ein Kugeldruckstück (5) zur temporären Fixierung des Wechselwerkzeugs (3, 3') am Aufnahmeteil (2) vorgesehen ist, wobei das Kugeldruckstück (5) eine einseitig geschlossene Hülse (6) umfasst, in welcher eine gefedert gelagerte Druckkugel (7) angeordnet ist, wobei die Druckkugel (7) in eine Kugelaufnahmeöffnung (8) am Wechselwerkzeug (3, 3') manuell einrastbar und wieder ausrastbar ist,
wobei die einseitig geschlossene Hülse (6) eine Symmetrieachse (S) aufweist, wobei die Druckkugel (7) entlang der Symmetrieachse (S) verschieblich ist, und wobei die Kugelaufnahmeöffnung (8) eine Mittelachse (M) aufweist, die in einem eingerasteten Zustand von Aufnahmeteil (2) und Wechselwerkzeug (3, 3') parallel zur Symmetrieachse (S) verläuft, **dadurch gekennzeichnet, dass**
die Symmetrieachse (S) und die Mittelachse (M) im eingerasteten Zustand in einem Abstand (A) von 1 bis 3,5 mm parallel verlaufen.

2. Schnellwechselsystem (1, 1') nach Anspruch 1, wobei das Aufnahmeteil (2) und das Wechselwerkzeug (3, 3') derart verrastbar sind, dass das Wechselwerkzeug (3, 3') in einer Einrastrichtung (E), welche senkrecht zu der Symmetrieachse (S) verläuft, in die Aufnahmeöffnung (4) einschiebbar ist.

3. Schnellwechselsystem (1, 1') nach einem der Ansprüche 1 oder 2, wobei die Kugelaufnahmeöffnung (8) einen Kontaktbereich (8a) aufweist, welcher im eingerasteten Zustand die Druckkugel (7) berührt, wobei der Kontaktbereich (8a) mit einem Kantenbruch versehen ist.

4. Schnellwechselsystem (1, 1') nach einem der Ansprüche 1 bis 3,
wobei mindestens ein Zentrierstift (9) am Aufnahmeteil (2) vorhanden ist, welcher in eine Zentrieröffnung (10) am Wechselwerkzeug (3, 3') einbringbar ist oder
wobei mindestens ein Zentrierstift (9) am Wechselwerkzeug (3, 3') vorhanden ist, welcher in eine Zentrieröffnung (10) am Aufnahmeteil (2) einbringbar ist.

5. Rundschalttisch (100), umfassend mindestens ein Schnellwechselsystem (1, 1'), insbesondere mindestens zwei Schnellwechselsysteme (1, 1') nach einem der Ansprüche 1 bis 4.

6. Verwendung des Rundschalttisches (100) nach Anspruch 5 zur Montage von Wälzlagern oder Gleitlagern oder zur Bearbeitung von Wälzlager- oder Gleitlagerbauteilen, sowie zur Montage oder zur Bearbeitung von Motorkomponenten.

## Claims

1. A quick-change system (1, 1') comprising at least one receiving part (2) and at least one interchangeable tool (3, 3'), wherein
- the receiving part (2) has at least one receiving opening (4) for receiving a respective interchangeable tool (3, 3'), wherein
at least one ball plunger (5) is provided for temporarily fixing the interchangeable tool (3, 3') to the receiving part (2), wherein the ball plunger (5) comprises a sleeve (6) that is closed on one side, in which a spring-mounted pressure ball (7) is arranged, wherein the pressure ball (7) is manually engageable in and disengageable from a ball-receiving opening (8) on the interchangeable tool (3, 3'),
wherein the sleeve (6) that is closed on one side has an axis of symmetry (S), wherein the pressure ball (7) is displaceable along the axis of symmetry (S), and wherein the ball-receiving opening (8) has a central axis (M) extending parallel to the axis of symmetry (S) in an engaged state of the receiving part (2) and the interchangeable tool (3, 3'), **characterised in that** the axis of symmetry (S) and the central axis (M) extend parallel at a distance (A) of 1 to 3.5 mm in the engaged state.

2. The quick-change system (1, 1') according to claim 1, wherein the receiving part (2) and the interchangeable tool (3, 3') are lockable to one another such that the interchangeable tool (3, 3') can be inserted into the receiving opening (4) in an engagement direction (E) extending perpendicular to the axis of symmetry (S).

3. The quick-change system (1, 1') according to one of claims 1 or 2, wherein the ball-receiving opening (8) has a contact area (8a) that contacts the pressure ball (7) in the engaged state, wherein the contact area (8a) is provided with a chamfer.

4. The quick-change system (1, 1') according to one of claims 1 to 3, wherein at least one centring pin (9) is provided on the receiving part (2), which is insertable into a centring opening (10) on the interchangeable tool (3, 3') or wherein at least one centring pin (9) is provided on the interchangeable tool (3, 3'), which is insertable into a centring opening (10) on the receiving part (2).

5. A rotary indexing table (100) comprising at least one quick-change system (1, 1'), in particular at least two quick-change systems (1, 1') according to one of claims 1 to 4.

6. Use of the rotary indexing table (100) according to claim 5 for mounting rolling bearings or slide bearings or for machining rolling bearing or slide bearing components, as well as for mounting or machining engine components.

## Revendications

1. Système à changement rapide (1, 1') comprenant au moins une pièce de réception (2) et au moins un outil de changement (3, 3'), dans lequel
- la pièce de réception (2) présente au moins une ouverture de réception (4) pour recevoir chacune un outil de changement (3, 3'), dans lequel
au moins un élément de pression sphérique (5) sert à fixer temporairement l'outil de changement (3, 3') à la pièce de réception (2), dans lequel l'élément de pression sphérique (5) comprend un manchon (6) fermé d'un côté, dans lequel est agencée une sphère de pression (7) montée de façon élastique, dans lequel la sphère de pression (7) peut être encliquetée et de nouveau décliquetée manuellement dans une ouverture de réception de sphère (8) de l'outil de changement (3, 3'),
dans lequel le manchon (6) fermé d'un côté présente un axe de symétrie (S), dans lequel la sphère de pression (7) est déplaçable le long de l'axe de symétrie (S), et dans lequel l'ouverture de réception de sphère (8) présente un axe central (M) qui s'étend parallèlement à l'axe de symétrie (S) dans un état encliqueté de la pièce de réception (2) et de l'outil de changement (3, 3'), **caractérisé en ce que** l'axe de symétrie (S) et l'axe central (M) s'étendent parallèlement à une distance (A) de 1 à 3,5 mm dans l'état encliqueté.

2. Système à changement rapide (1, 1') selon la revendication 1, dans lequel la pièce de réception (2) et l'outil de changement (3, 3') peuvent être encliquetés de telle sorte que l'outil de changement (3, 3') peut être inséré dans l'ouverture de réception (4) dans une direction d'encliquetage (E) qui est perpendiculaire à l'axe de symétrie (S).

3. Système à changement rapide (1, 1') selon l'une des revendications 1 ou 2, dans lequel l'ouverture de réception de sphère (8) présente une zone de contact (8a) qui, dans l'état encliqueté, touche la sphère de pression (7), dans lequel la zone de contact (8a) est dotée d'un chanfrein.

4. Système à changement rapide (1, 1') selon l'une des revendications 1 à 3, dans lequel au moins une tige de centrage (9) se trouve sur la pièce de réception (2), laquelle peut être introduite dans une ouverture de centrage (10) sur l'outil de changement (3, 3') ou dans lequel au moins une tige de centrage (9) se trouve sur l'outil de changement (3, 3'), laquelle peut être introduite dans une ouverture de centrage (10) sur la pièce de réception (2).

5. Table à transfert circulaire (100), comprenant au moins un système à changement rapide (1, 1'), en particulier au moins deux systèmes à changement rapide (1, 1') selon l'une des revendications 1 à 4.

6. Utilisation de la table à transfert circulaire (100) selon la revendication 5 pour le montage de roulements ou de paliers lisses ou pour l'usinage de composants de roulements ou de paliers lisses, ainsi que pour le montage ou l'usinage de composants de moteur.
